# NEUE EUROPÄISCHE PATENTSCHRIFT

(11) **EP 2 903 838 B2**
(45) Veröffentlichungstag und Bekanntmachung des Hinweises auf die Entscheidung über den Einspruch: **21.10.2020**
(45) Hinweis auf die Patenterteilung: 31.05.2017
(21) Anmeldenummer: 14727505.1
(22) Anmeldetag: 02.06.2014
(51) Int. Cl.: B60G 7/00, B60G 9/00, B60G 11/28

(54) **LENKEREINHEIT**
STEERING UNIT
UNITÉ DE DIRECTION

(30) Priorität: 31.05.2013 DE 102013210142
(43) Veröffentlichungstag der Anmeldung: 12.08.2015
(73) Patentinhaber: SAF-HOLLAND GmbH, 63856 Bessenbach (DE)
(72) Erfinder: SCHEWERDA, Steffen, West Olive, Michigan 49460 (US)
(74) Vertreter: Müller Schupfner & Partner Patent- und Rechtsanwaltspartnerschaft mbB
(86) Internationale Anmeldenummer: PCT/EP2014/061303
(87) Internationale Veröffentlichungsnummer: WO 2014/191570

(56) Entgegenhaltungen:
- EP-A1- 0 647 795
- EP-A2- 1 691 105
- CA-A1- 976 578
- DE-A1- 4 213 676
- DE-U1- 29 824 897
- US-A- 4 858 949
- US-A1- 2002 067 016

## Beschreibung

Die vorliegende Erfindung betrifft eine Lenkereinheit, insbesondere zum Einsatz in Nutzfahrzeugen.

Lenkereinheiten sind aus dem Stand der Technik hinlänglich bekannt. Sie dienen der gefederten Lagerung von Fahrzeugrädern am Rahmen des Fahrzeuges, insbesondere Nutzfahrzeuges. Die Lenkereinheit besitzt zu diesem Zweck einen Aufnahmeabschnitt für eine Luftfeder sowie einen Bereich zur schwenkbaren Lagerung am Fahrzeugrahmen. Weiterhin ist üblicherweise ein Bereich zur Aufnahme der Achse, bzw. des Achsstummels vorgesehen. Bisher wurden solche Lenkereinheiten vorzugsweise als einstückige Guss- oder Schmiedeteile hergestellt, wobei es erforderlich ist, für jeden Nutzfahrzeugtyp eine eigene Lenkereinheit zu entwickeln und bereitzustellen, welche den Bauraumverhältnissen im Fahrwerksbereich entspricht und es erlaubt die nötigen Lasten aufzunehmen. Die aus dem Stand der Technik bekannten Lenkereinheiten sind daher nur für einen Fahrzeugtyp einsetzbar und der Entwicklungsaufwand ist entsprechend hoch. Es besteht ein Verbesserungsbedarf dahingehend, den Einsatz einer Lenkereinheit in verschiedenen Fahrzeugtypen zu ermöglichen und gleichzeitig durch intelligente Funktionsverteilung das Gewicht der Lenkereinheit zu reduzieren.

Die DE 298 24 897 U1 offenbart eine Lenkereinheit umfassend einen Arm und ein Stützelement, wobei das Stützelement einen Tragbereich und einen stützseitigen Eingriffsbereich aufweist, wobei der Arm einen armseitigen Eingriffsbereich aufweist, wobei am armseitigen Eingriffsbereich ein erstes Eingriffsmittel vorgesehen ist, welches mit einem am stützseitigen Eingriffsbereich vorgesehenen zweiten Eingriffsmittel in Eingriff gebracht ist, und wobei der Tragbereich einen Befestigungsbereich zur Festlegung eines Luftfederbalges und eine Abrollfläche aufweist.

Aufgabe der vorliegenden Erfindung ist es, eine Lenkereinheit bereitzustellen, welche vielseitig einsetzbar ist und gleichzeitig ein geringeres Gewicht aufweist als die aus dem Stand der Technik bekannten Lenkereinheiten.

Diese Aufgabe wird gelöst mit einer Lenkereinheit gemäß Anspruch 1 und Anspruch 2. Weitere Vorteile und Merkmale der Erfindung ergeben sich aus den abhängigen Ansprüchen.

Erfindungsgemäß umfasst die Lenkereinheit einen Arm und ein Stützelement, wobei das Stützelement einen Tragbereich und einen stützseitigen Eingriffsbereich aufweist und einstückig ausgebildet ist, wobei der Arm einen armseitigen Eingriffsbereich aufweist, wobei am armseitigen Eingriffsbereich ein erstes Eingriffsmittel vorgesehen ist, das mit einem am stützseitigen Eingriffsbereich vorgesehenen zweiten Eingriffsmittel in Eingriff bringbar ist, wobei der Tragbereich einen Befestigungsabschnitt zur Festlegung eines Luftfederbalges und eine Abrollfläche aufweist. Der Arm der Lenkereinheit ist vorzugsweise der länglich ausgebildete Teil eines Längslenkers eines Fahrwerkes, welcher sich im Wesentlichen in Fahrzeuglängsrichtung erstreckt. Üblicherweise ist der Arm an seinem ersten distalen Ende am Rahmen des Fahrzeuges gegen translatorische Bewegungen relativ zum Fahrzeug gesichert und schwenkbar um eine quer zur Fahrzeuglängsrichtung ausgerichtete Achse gelagert. An seinem, dem ersten Ende gegenüberliegenden distalen Ende weist der Arm einen armseitigen Eingriffsbereich auf. Die Lenkereinheit umfasst darüber hinaus ein Stützelement, welches als vom Arm separates -und somit montier- und demontierbares - Bauteil ausgebildet ist. Das Stützelement weist einen Tragbereich auf, welcher vorzugsweise die Funktionen des Tauchkolbens einer Luftfeder übernimmt und zu diesem Zweck einen Befestigungsabschnitt und eine Abrollfläche aufweist. Der Befestigungsabschnitt dient insbesondere der Befestigung des Luftfederbalges, insbesondere bevorzugt durch eine Klemmung, beispielsweise durch eine Klemmplatte, welche am Befestigungsabschnitt des Tragbereiches festgelegt wird. Die Abrollfläche des Tragbereiches ist vorzugsweise eine seitliche Mantel- bzw. Außenfläche des Tragbereiches, welche sowohl antiklastische Krümmungen als auch synklastische Krümmungen aufweist. Die Abrollfläche des Tragbereiches dient, ähnlich einer Abrollfläche eines Tauchkolbens, dem Abstützen des Luftfederbalges im Betrieb der Lenkereinheit, wobei vorzugsweise sämtliche der mit der Luftfeder in Kontakt geratenden Bereiche gerundete Geometrien aufweisen. Es kann auf diese Weise eine Beschädigung des Luftfederbalges durch scharfkantige Geometrien am Tragbereich vermieden werden. Das erfindungsgemäße Stützelement verbindet somit die Funktionen eines Tauchkolbens zum Einsatz einer Luftfeder mit dem Teil der
Funktion eines herkömmlichen Längslenkers, welcher den Tauchkolben und damit die gesamte Luftfeder in einem vorbestimmten Abstand zu seinem ersten distalen Ende, an welchem er schwenkbar gelagert ist, anordnet. Das Stützelement ist einstückig ausgebildet, wobei als Einstückigkeit in diesem Zusammenhang, neben einer homogenen Ausführung aus einem Vollmaterial wie Stahl oder Aluminium, auch ein gleichmäßiger Verbund aus Kompositwerkstoffen, bevorzugt Kohle- oder Glasfasern in Kombination mit Harz- bzw. Matrixmaterial und eingelegten, bzw. eingekleideten Metallelementen zu lokalen Festigkeitssteigerung, verstanden wird. Gekennzeichnet ist die Einstückigkeit dabei durch eine, vorzugsweise bereits mit der Herstellung erzeugte, untrennbare Verbindung, bzw. Verflechtung der Werkstoffkomponenten, welche nur unter Zerstörung des Material, bzw. der Strukturen wieder trennbar ist. Insbesondere ist der Tragbereich einstückig mit dem stützseitigen Befestigungsbereich ausgeführt.
Gemäß einem ersten Aspekt der Erfindung ist die Abrollfläche im Wesentlichen rotationssymmetrisch um eine Federachse ausgebildet, wobei die maximale Erstreckung der Abrollfläche quer zur Federachse der Radius eines gedachten Zylinders ist, wobei der stützseitige Eingriffsbereich am Stützelement vorzugsweise außerhalb des gedachten Zylinders angeordnet ist. Im Wesentlichen rotationssymmetrisch bedeutet in diesem Zusammenhang, dass kleinere Abweichungen von der mathematisch perfekten Rotationssymmetrie um die Federachse an der Abrollfläche durchaus zulässig sind, ohne dass die Funktion der erfindungsgemäßen Lenkereinheit beeinträchtigt ist. Die maximale Erstreckung der Abrollfläche quer bzw. bevorzugt senkrecht zur Federachse definiert dabei den Radius eines gedachten Zylinders, welcher sich konzentrisch um die Federachse erstreckt und die Abrollfläche somit vollständig einschließt. Vorzugsweise ist der stützseitige Eingriffsbereich am Stützelement außerhalb des gedachten Zylinders angeordnet. Mit anderen Worten also seitlich am Tragbereich des Stützelements, wobei der stützseitige Eingriffsbereich eine, bezogen auf den gedachten Zylinder, radiale Erstreckung aufweist. Die Federachse ist vorzugsweise parallel bzw. gleich der Richtung entlang derer der Tragbereich in den Luftfederbalg einfedert. Es versteht sich, dass aufgrund der Tatsache, dass das Stützelement sich an der schwenkbar aufgehängten Lenkereinheit entlang einer Kreisbahn bewegt, die genaue Übereinstimmung zwischen Federachse und Einfederrichtung in den Luftbalg der Luftfeder nur in einer bestimmten Verschwenkposition der Lenkereinheit relativ zum Fahrwerk des Nutzfahrzeuges vorliegt. Vorzugsweise ist diese Schwenkposition die Position der Lenkereinheit relativ zum Fahrwerk, bei welcher die gewünschte Fahrhöhe vorliegt. Als Fahrhöhe wird in diesem Zusammenhang die aus dem Stand der Technik bekannte Definition verwendet, wonach die drehbare Lagerung der Räder des Fahrzeuges in einem bestimmten vertikalen Abstand zu einer Referenzhöhe am Fahrzeugrahmen angeordnet sind.

Bevorzugt weist der stützseitige Eingriffsbereich eine maximale Erstreckung quer zur Federachse auf, wobei das Verhältnis des Radius' des gedachten Zylinders zur Erstreckung des stützseitigen Eingriffsbereiches im Bereich von 0,1 bis 0,95, vorzugsweise 0,3 bis 0,8 und besonders bevorzugt bei ca. 0,4 bis 0,6 liegt. Die maximale Erstreckung des stützseitigen Eingriffsbereiches quer bzw. bevorzugt senkrecht zur Federachse ist mit anderen Worten ein Maß für den Abstand, den der stützseitige Eingriffsbereich vom Tragbereich hat. Je größer dabei die Erstreckung des stützseitigen Angriffsbereiches quer zur Federachse ist desto größer wird auch der Hebelarm, welcher durch die Luftfeder über den Tragbereich des Stützelements auf den stützseitigen Eingriffsbereich wirkt. Andererseits wird durch einen großen Abstand des stützseitigen Eingriffsbereiches von der Abrollfläche des Stützelements ausreichender Bauraum bereitgestellt, in welchem sich die Luftfeder in ihrem maximal eingefederten Zustand ausbreiten kann. Durch die Wahl eines bevorzugten Verhältnisses des Radius' zur Erstreckung im Bereich von 0,1-0,95 kann insbesondere bevorzugt der Bauraum an der Lenkereinheit optimal ausgenutzt werden und gleichzeitig verhindert werden, dass die Luftfeder im maximal eingefederten Zustand mit eventuell scharfkantigen Geometrien im Bereich des stützseitigen Eingriffsbereiches in Kontakt kommt. Insbesondere bei Vorliegen einer Abrollfläche mit einer großen maximalen Erstreckung quer zur Federachse, welche zu einem großen Radius des gedachten Zylinders führt, ist davon auszugehen, dass auch die an dem Tragbereich des Stützelements festgelegte Luftfeder einen größeren Platzbedarf im eingefederten Zustand hat, wobei entsprechend der Stützbereich des Stützelements vorzugsweise in einem größeren Abstand von der Federachse angeordnet ist, um Kollisionen zwischen dem Stützbereich und dem Luftfederbalg zu vermeiden.

Besonders bevorzugt sind ausgewählte Kanten des stützseitigen Eingriffsbereiches gerundet ausgeführt, wobei der Rundungsradius in Bereich von 1mm - 30mm, vorzugsweise 5mm - 20mm und insbesondere bevorzugt bei ca. 10mm - 14mm liegt. Als ausgewählte Kanten werden in diesem Zusammenhang bevorzugt jene Kanten, oder Abschnitte von Kanten angesehen, die im Betrieb der Lenkereinheit mit einem am Tragbereich festgelegten Luftfederbalg in Kontakt kommen können. Insbesondere die Kanten auf der Oberseite, bzw. der Seite, zu welcher sich auch der Tragabschnitt erstreckt, des stützseitigen Eingriffsbereiches sind vorzugsweise mit Rundungen versehen. Die gerundeten Kanten gewährleisten, dass der Luftfederbalg im stark eingefederten Zustand und bei eventuellem Anliegen an dem stützseitigen Eingriffsbereich, Beschädigungen durch Schnitte und Kerbbildung erleidet. Der Rundungsradius ist dabei vorzugsweise im Bereich von 1 mm bis 30mm gewählt, um die Festigkeit des stützseitigen Eingriffsbereiches nicht zu stark zu schwächen und gleichzeitig die Scharfkantigkeit am stützseitigen Eingriffsbereich zu reduzieren. Dabei kann ein geringer Rundungsradius von 1 mm bis 8mm ausreichen, wenn der Luftfederbalg aus relativ stabilem Material gefertigt ist, und so eine starke Rundung mit über 14mm Rundungsradius nicht erforderlich ist. Andererseits kann es bevorzugt sein, eine Rundung mit einem Rundungsradius von 15mm bis 30mm auszubilden, wenn häufiger Kontakt des, eventuell empfindlichen Luftbalges mit dem stützseitigen Eingriffsbereich erwartet wird und eine Schwächung des stützseitigen Eingriffsbereiches daher in Kauf genommen wird.
Gemäß einem zweiten Aspekt der Erfindung ist das erste Eingriffsmittel als Vorsprung oder Rücksprung ausgebildet, wobei das zweite Eingriffsmittel eine zum ersten Eingriffsmittel korrespondierende Geometrie aufweist und mit dem ersten Eingriffsmittel in formschlüssigen Eingriff bringbar ist. Das am armseitigen Eingriffsbereich vorgesehene erste Eingriffsmittel kann besonders bevorzugt als Vorsprung, wie beispielsweise eine Nase oder eine hakenförmige Geometrie oder eine in sonstiger Weise vom armseitigen Eingriffsbereich abstehende Geometrie sein. Vorzugsweise ist in diesem Fall das zweite Eingriffsmittel, welches am Stützelement vorgesehen ist, derart ausgebildet, dass es formschlüssig mit dem ersten Eingriffsmittel in Eingriff gebracht werden kann bzw. am ersten Eingriffsmittel formschlüssig eingreift. Vorzugsweise kann auch das als Rücksprung ausgebildete Eingriffsmittel eine Hinterschneidung aufweisen, wobei das jeweils andere als Vorsprung ausgebildete Eingriffsmittel entlang einer bestimmten Verlagerungsrichtung in das als Rücksprung ausgebildete Eingriffsmittel einführbar und dann beispielsweise durch ein weiteres Eingriffsmittel in einer Position sicherbar ist, in welcher die Hinterschneidung des als Rücksprung ausgebildeten Eingriffsmittels eine Verlagerung der Eingriffsmittel zueinander und somit des Stützelements relativ zum Arm verhindert. Als korrespondierende Geometrie wird in diesem Zusammenhang definiert, dass, wenn das eine Eingriffsmittel als Rücksprung ausgebildet ist, das jeweils andere Eingriffsmittel entweder ein zu der Geometrie des Rücksprungs korrespondierend ausgebildeter Vorsprung ist, oder ein weiterer Rücksprung ist, wobei in diesem Fall ein Befestigungselement vorgesehen ist, welches in beide als Rücksprung ausgebildete Eingriffsmittel eingreift und diese somit gegen Verlagerung relativ zueinander sichert. Vorzugsweise ist ein Fixierelement vorgesehen, welches sowohl mit dem ersten Eingriffsmittel als auch mit dem zweiten Eingriffsmittel in formschlüssigen Eingriff bringbar ist. Das Fixierelement kann beispielsweise eine Schraube sein, welche mit dem ersten und dem zweiten Eingriffsmittel in Eingriff steht, wobei beide Eingriffsmittel entsprechend als Rücksprung bzw. Bohrung ausgebildet sind. Alternativ bevorzugt kann das Fixierelement auch ein Körper sein, welcher seinerseits Rücksprünge aufweist, welche mit den als Vorsprung ausgebildeten ersten bzw. zweiten Eingriffsmittel in formschlüssigen Eingriff bringbar sind.
Gemäß dem zweiten Aspekt der Erfindung ist eine Vielzahl von ersten und zweiten Eingriffsmitteln vorgesehen, wobei vorzugsweise zumindest ein erstes Eingriffsmittel und ein zweites Eingriffsmittel jeweils als Bohrung ausgeführt sind, wobei ein Fixierelement mit beiden Eingriffsmitteln in Eingriff bringbar ist. Vorzugsweise ist eine Vielzahl von ersten und zweiten Eingriffsmitteln vorgesehen, welche besonders bevorzugt beispielsweise einen hakenförmigen Querschnitt aufweisen und mit einer korrespondierend dazu vorgesehenen Geometrie der jeweils gegenüberliegenden Eingriffsmittel durch Verlagerung des Stützelements relativ zum Arm in Eingriff bringbar sind. Zur Fixierung des Stützelements in der Position, in welcher die Eingriffsmittel jeweils miteinander in formschlüssigem Eingriff stehen, ist es bevorzugt, dass ein Fixierelement vorgesehen ist, welches zusätzlich mit dafür vorgesehenen Eingriffsmitteln in Eingriff gelangt, wobei das Fixierelement im Wesentlichen dazu dient, die Stützeinheit und den Arm in einer Position relativ zueinander zu sichern, in welcher die ersten und zweiten Eingriffsmittel miteinander einen Formschluss eingehen. Das Fixierelement kann dabei als Bolzen oder Schraube bzw. auch als Platte ausgebildet sein und wird bevorzugt in einem letzten Montageschritt an der Lenkereinheit festgelegt.

In einer bevorzugten Ausführungsform weist der armseitige Eingriffsbereich eine erste Anlagefläche auf, an welcher eine zweite Anlagefläche des stützseitigen Eingriffsbereiches sich abstützend zur Anlage bringbar ist. Vorzugsweise zusätzlich zum formschlüssigen Eingriff der Eingriffsmittel miteinander ist am armseitigen Eingriffsbereich eine erste Anlagefläche vorgesehen, welche zur Abstützung einer entsprechend korrespondierend ausgebildeten Anlagefläche des stützseitigen Eingriffsbereiches ausgelegt ist. Insbesondere bei den zu erwartenden Biegebelastungen, welche auf die Schnittstelle zwischen dem Stützelement und dem Arm wirken, ist es bevorzugt, dass vorzugsweise der Druckspannungsanteil dieser Biegebelastung über eine einfache Anlagefläche von einem Element auf das andere übertragen wird, wobei auf diese Weise die Konstruktion der Lenkereinheit vereinfacht werden kann.

In einer weiteren bevorzugten Ausführungsform weist der Arm einen ersten Lagerabschnitt, einen Tragabschnitt und einen zweiten Lagerabschnitt auf, wobei der Tragabschnitt sich zwischen dem ersten und dem zweiten Lagerabschnitt erstreckt, wobei eine Armachse durch den ersten und den zweiten Lagerabschnitt verläuft, wobei der armseitige Eingriffsbereich eine mittlere Haupterstreckungsrichtung aufweist, und wobei die mittlere Haupterstreckungsrichtung des armseitigen Eingriffsbereiches zur Armachse um einen Winkel α verschwenkt, bzw. geneigt ist. Der erste Lagerabschnitt des Armes ist vorzugsweise die Schwenkachse, bzw. der Bereich, in welchem der Arm und damit die gesamte Lenkereinheit schwenkbar am Lagerbock des Fahrzeugrahmens festgelegt ist. Vorzugsweise ist der erste Lagerabschnitt als zylinderförmige Hülse ausgebildet, welche sich quer zur Fahrzeuglängsrichtung erstreckt. Der zweite Lagerabschnitt ist vorzugsweise die Achsmitte bzw. der Bereich, in welchem das Achsrohr des Fahrzeuges oder der Achsstummel am Arm der Lenkereinheit festlegbar bzw. festgelegt ist. Besonders bevorzugt erstreckt sich die Armachse durch die geometrischen Mittelpunkte des ersten und des zweiten Lagerabschnitts, wobei sich der Tragabschnitt nicht zwangsläufig konzentrisch oder entlang der Armachse erstrecken muss, sondern auch einen gekrümmten Verlauf aufweisen kann. Besonders bevorzugt verläuft die Armachse im ersten Lagerabschnitt durch die Achse, um welche der Arm bzw. die Lenkereinheit schwenkbar gelagert ist und insbesondere bevorzugt durch den Punkt auf dieser Schwenkachse, welcher mittig im ersten Lagerabschnitt angeordnet ist. Ebenso bevorzugt verläuft die Armachse im zweiten Lagerabschnitt durch den Punkt, welcher vorzugsweise auf der Drehachse, welche durch den Achsstummel definiert wird und dabei ebenfalls mittig im zweiten Lagerabschnitt auf der Drehachse liegt. Der armseitige Eingriffsbereich weist eine Erstreckung auf, welche im Wesentlichen entlang einer mittleren Haupterstreckungsrichtung verläuft. Insbesondere bevorzugt ist es dabei, dass das eine oder die Vielzahl von ersten Eingriffsmitteln entlang dieser mittleren Haupterstreckungsrichtung angeordnet sind, oder in einer Ebene, welche parallel zur mittleren Haupterstreckungsrichtung des armseitigen Eingriffsbereiches verläuft, liegen. Weiterhin bevorzugt ist es, dass die Richtung entlang derer das Stützelement relativ zum Arm verlagert wird, um die ersten Eingriffsmittel in formschlüssigen Eingriff mit den zweiten Eingriffsmitteln zu bringen, ebenfalls parallel zu der mittleren Haupterstreckungsrichtung des armseitigen Eingriffsbereiches ist. Weiterhin bevorzugt kann auch die erste Anlagefläche in der Haupterstreckungsrichtung bzw. parallel zur Haupterstreckungsrichtung des armseitigen Eingriffsbereiches angeordnet sein. Indem die mittlere Haupterstreckungsrichtung des armseitigen Eingriffsbereiches verschwenkt zur Armachse ausgebildet ist, kann allein durch die Wahl, an welcher Position des armseitigen Eingriffsbereiches der stützseitige Eingriffsbereich festgelegt ist, gleichzeitig sowohl die Fahrhöhe als auch die Gesamtlänge der Federeinheit eingestellt werden.

Vorzugsweise besitzt der Winkel α Werte von 1° bis 90°, besonders bevorzugt 15° bis 75° und insbesondere bevorzugt von ca. 30° bis 60°. Bei einem bevorzugten Winkel von α = 90° erstreckt sich der armseitige Eingriffsbereich im Wesentlichen senkrecht zu einer durch dem ersten und dem zweiten Lagerabschnitt des Armes definierten Armachse. Hierbei kann durch Anordnung des stützseitigen Eingriffsbereiches an einer bestimmten Position und somit in einer bestimmten Höhe am armseitigen Eingriffsbereich die Fahrhöhe des Fahrzeuges eingestellt werden, wobei gleichzeitig die Gesamterstreckung bzw. die Länge der Lenkereinheit in Längsrichtung des Fahrzeuges im Wesentlichen unverändert bleibt. Bei einem bevorzugten Winkel von α = 0° erstreckt sich der armseitige Eingriffsbereich längs der Armachse und es kann durch eine Anordnung des stützseitigen Eingriffsbereiches am armseitigen Eingriffsbereich die Länge der Lenkereinheit und damit insbesondere die Beabstandung des Tragbereiches des Stützelements vom zweiten Lagerabschnitt des Armes eingestellt werden, ohne dass die Fahrhöhe hierbei wesentlich verändert wird. Besonders bevorzugt ist ein Winkelbereich von 30 bis 60°, da sich gezeigt hat, dass durch die Erstreckung des armseitigen Eingriffsbereiches entlang einer mittleren Haupterstreckungsrichtung, welche um 30 bis 60° zur Armachse steht, die größtmögliche Flexibilität der Einstellung sowohl der Länge der Lenkereinheit als auch der Fahrhöhe gegeben ist.

In einer besonders bevorzugten Ausführungsform ist der armseitige Eingriffsbereich bogenförmig ausgebildet, wobei besonders bevorzugt eine konvexe erste Anlagefläche am armseitigen Eingriffsbereich vorgesehen ist. Durch die bogenförmige bzw. gekrümmte Ausbildung des armseitigen Eingriffsbereiches ist es möglich, durch Wahl einer bestimmten Festlegungsposition des stützseitigen Eingriffsbereiches am armseitigen Eingriffsbereich sowohl die Länge der Lenkereinheit und die Fahrhöhe einzustellen und gleichzeitig das Stützelement in einer bestimmten Verschwenkung relativ zum Arm anzuordnen, wobei durch diese Verschwenkung, insbesondere das Einfedern und Ausfedern des Luftfederbalges am Tragabschnitt und insbesondere dessen Abrollen an der Abrollfläche optimiert ist.

Besonders bevorzugt weist die Krümmung des armseitigen Eingriffsbereiches einen Krümmungsradius auf, der gleich dem Abstand von der im ersten Lagerabschnitt des Armes angeordneten Schwenkachse bis zur ersten Anlagefläche des Armes ist. Es kann auf diese Weise in verschiedenen Befestigungspositionen des stützseitigen Eingriffsbereiches am armseitigen Eingriffsbereich die Fahrhöhe verändert werden, und gleichzeitig der Tragbereich des Stützelements möglichst verschwenkungsfrei relativ zur Horizontalen gehalten werden. Mit anderen Worten ist es bevorzugt, dass die Federachse des Tragbereiches des Stützelements bei Vorliegen der angestrebten Fahrhöhe bzw. dem angestrebten Standardeinfederzustand des Luftbalges eine Tangente zur durch die Verschwenkbewegung der Lenkereinheit beschriebenen Kreisbahn ist.

Ferner bevorzugt weist das erste Eingriffsmittel eine Eingriffsrichtung auf, welche in einer Parallelfläche zur ersten Anlagefläche liegt, wobei vorzugsweise eine Vielzahl erster Eingriffsmittel entlang dieser Parallelfläche am armseitigen Eingriffsbereich vorgesehen ist. Die Eingriffsrichtung ist vorzugsweise die Richtung entlang derer das Stützelement relativ zum Arm in eine festgelegte Position einführbar bzw. aus einer festgelegten Position herausnehmbar ist. Insbesondere, wenn eine Vielzahl von ersten Eingriffsmitteln vorgesehen ist, ist es bevorzugt, dass alle der Eingriffsmittel eine Eingriffsrichtung aufweisen, welche sich entlang einer Parallelfläche zur ersten Anlagefläche des armseitigen Eingriffsabschnitts erstreckt.

Besonders bevorzugt ist eine größere Zahl erster Eingriffsmittel als zweite Eingriffsmittel vorgesehen, wobei die ersten Eingriffsmittel mit gleichen Abständen zueinander am armseitigen Eingriffsbereich angeordnet sind. Indem am armseitigen Eingriffsbereich eine Vielzahl erster Eingriffsmittel vorgesehen ist, von denen nur ausgewählte mit den stützseitigen zweiten Eingriffsmitteln in Eingriff gelangen, ist es möglich, das Stützelement in verschiedenen Positionen relativ zum Arm festzulegen, um so die Lenkereinheit an die jeweiligen Einsatzanforderungen des Fahrwerks anzupassen. Insbesondere kann durch die Wahl einer bestimmten Festlegungsposition des Stützelements am Arm die Fahrhöhe und/oder die Länge der Lenkereinheit eingestellt werden. Weiterhin ist es auch möglich, dass weitere erste Eingriffsmittel vorgesehen sind, welche seitlich, das heißt, bevorzugt quer zur Haupterstreckungsrichtung des armseitigen Eingriffsbereiches versetzt angeordnete erste Eingriffsmittel vorgesehen sind, wobei die zweiten Eingriffsmittel jeweils nur mit ausgewählten dieser ersten Eingriffsmittel in Eingriff bringbar sind und dadurch eine bestimmte Spur durch das Stützelement bzw. die Lenkereinheit einstellbar ist. Als Spurversatz wird in diesem Zusammenhang ein Versatz entlang der Fahrzeugquerrichtung verstanden.

Besonders bevorzugt weist das Stützelement einen Kompositwerkstoff auf, wobei vorzugsweise ein 0,2- bis 1-faches, besonders bevorzugt ein 0,5- bis 1-faches und insbesondere bevorzugt ein 0,75- bis 0,95-faches des Stützelements aus einem Kompositwerkstoff hergestellt ist. Als Kompositwerkstoff wird in diesem Zusammenhang insbesondere ein faserverstärkter Werkstoff verstanden, bei welchem ein Fasermaterial mit besonders hoher Zugfestigkeit von einem Matrixmaterial umgeben ist, wobei die Fasern des Fasermaterials insbesondere entlang der Hauptkraftrichtung bzw. kraftflussoptimiert angeordnet sind. Bestimmte Bereiche des Stützelements, wie beispielsweise die zweiten Eingriffsmittel, sind dabei bevorzugt aus Metall hergestellt, weil in diesen Bereichen auf engem Raum hohe Kräfte übertragen werden müssen. Großflächigere Bereiche, wie beispielsweise der Tragbereich mit der Abrollfläche können dabei aber beispielsweise aus gelegten oder geflochtenen Kompositstrukturen bestehen. Es kann durch den Einsatz von Kompositwerkstoff insbesondere das Gewicht bei gleichbleibender Festigkeit reduziert werden.

Vorzugsweise kommt als Kompositwerkstoff ein Kohlefaserverbundwerkstoff zum Einsatz. Alternativ bevorzugt könnte auch GLARE (glas-fibre reinforced aluminium), ein Aramidfaserverbundwerkstoff, oder besonders bevorzugt ein Glasfaserverbundwerkstoff, welcher vorzugsweise günstiger in der Anschaffung ist als beispielsweise Aramid- oder Kohlefaserverbund.

In einer besonders bevorzugten Ausführungsform weist der stützseitige Eingriffsbereich eine Fachwerkstruktur auf. Als Fachwerk wird in diesem Zusammenhang eine einstückig ausgebildete stegartige Struktur mit lokalen Aussparungen definiert, bei der die tragenden Materialstege je nach der zu erwartenden Kraft- und Momentrichtung ausgerichtet sind und entsprechende Materialdicken aufweisen, wobei aber Gewicht eingespart werden kann dadurch, dass lokale Aussparungen im stützseitigen Eingriffsbereich vorgesehen sind. Bei einer Herstellung des Stützelements aus Kompositwerkstoff ist es bevorzugt, dass die Fasern des Kompositwerkstoffes entlang der Haupterstreckungsrichtung der Stege verlaufen, wodurch der Kraftfluss durch den stützseitigen Eingriffsbereich besonders günstig gestaltet werden kann und bei möglichst geringen Stegdicken und damit einem möglichst geringen Gewicht trotzdem die zu erwartenden hohen Kräfte bzw. Biegemomente durch den stützseitigen Eingriffsbereich übertragen werden können. Von einer Fachwerksstruktur im klassischen Sinne unterscheidet sich die hier bevorzugte Fachwerkstruktur dadurch, dass die Stege des stützseitigen Eingriffsbereiches neben Zug- und Druckspannungen bzw. -kräften auch Biegemomente übertragen.

Vorzugsweise ist im Befestigungsabschnitt des Stützelements eine Klemmplatte zur kraftschlüssigen Festlegung eines Luftfederbalges vorgesehen. Insbesondere bevorzugt ist es dabei, dass die Klemmplatte durch eine durch das Stützelement hindurch reichende Schraube gegen den entsprechenden Rand, welcher zur Festlegung des Luftfederbalges dient, gezwungen wird, wobei besonders bevorzugt die entsprechende Schraube von der Unterseite des Stützelementes, also von außerhalb des Luftfederbalges erreichbar und anziehbar ist.

Weitere Vorteile und Merkmale der Erfindung ergeben sich aus der nachfolgenden Beschreibung mit Bezug auf die beigefügten Figuren. Es versteht sich, dass einzelne in den Figuren gezeigte Merkmale und Ausführungsformen jeweils auch für in anderen Figuren gezeigte Ausführungsformen Anwendung finden können, sofern dies nicht explizit ausgeschlossen ist. Es zeigen:
- Fig. 1: eine Seitenansicht einer ersten bevorzugten Ausführungsform der erfindungsgemäßen Lenkereinheit,
- Fig. 2: eine Draufsicht der in Fig. 1 gezeigten bevorzugten Ausführungsform der erfindungsgemäßen Lenkereinheit,
- Fig. 3: eine Ansicht einer weiteren bevorzugten Ausführungsform der erfindungsgemäßen Lenkereinheit,
- Fig. 4: eine teilweise geschnittene Seitenansicht einer bevorzugten Ausführungsform des erfindungsgemäßen Stützelements, und
- Fig. 5 - 7: Detailansichten von bevorzugten Ausführungsformen der Schnittstelle zwischen Arm und Stützelement.

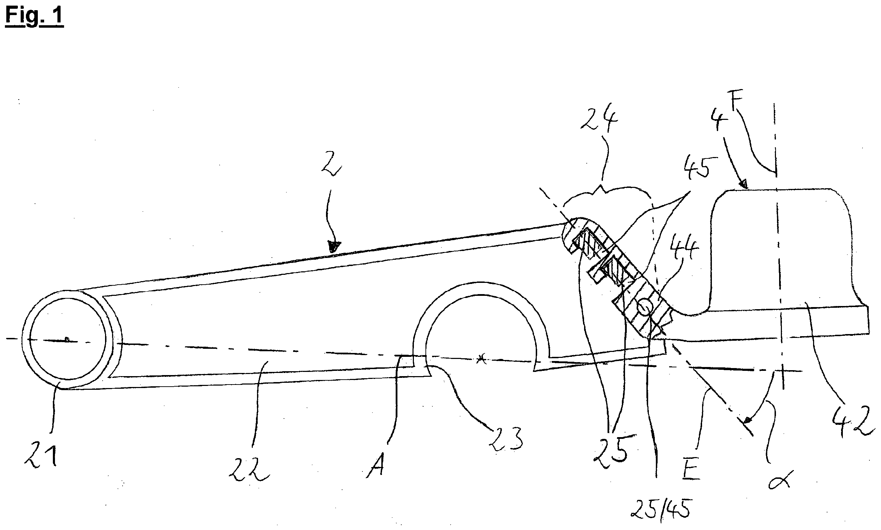

Die in Fig. 1 gezeigte Seitenansicht einer bevorzugten Ausführungsform der erfindungsgemäßen Lenkereinheit weist einen Arm 2 und ein Stützelement 4 auf, wobei der Arm 2 einen ersten Lagerabschnitt 21, benachbart dazu einen Tragabschnitt 22 und einen zweiten Lagerabschnitt 23 aufweist. An dem, dem ersten Lagerabschnitt 21 gegenüberliegenden Ende des Armes 2 ist ein armseitiger Eingriffsabschnitt 24 vorgesehen, welcher sich im Wesentlichen längs einer mittleren Haupterstreckungsrichtung E erstreckt. Am armseitigen Eingriffsbereich 24 ist der stützseitige Eingriffsbereich 44 des Stützelements 4 formschlüssig festlegbar, welcher in der Figur zur besseren Veranschaulichung teilweise geschnitten dargestellt ist. Hierzu weist der armseitige Eingriffsbereich 24 erste Eingriffsmittel 25 auf und der stützseitige Eingriffsbereich 44 zweite Eingriffsmittel 45. Vorzugsweise sind die ersten Eingriffsmittel 25 verschiedenartig ausgebildet. Wie dargestellt sind die oberen beiden ersten Eingriffsmittel 25 als Vorsprünge mit im Wesentlichen rechteckigem Querschnitt ausgebildet und ragen vom armseitigen Eingriffsbereich 24 aus in Richtung des Betrachters. Das untere erste Eingriffsmittel 25 kann dabei vorzugsweise eine zylinderförmige Bohrung sein, zu welcher korrespondierend, ein als Bohrung ausgelegtes zweites Eingriffsmittel 45 am stützseitigen Eingriffsbereich 44 vorgesehen ist. In Fig. 1 ist die Stellung dargestellt, in welcher die als hakenförmige Aussparung ausgebildeten zweiten Eingriffsmittel 45 derart angeordnet sind, dass ihre Innenkontur eine Hinterscheidung bildet, welche mit je einem ersten Eingriffsmittel 25 in formschlüssigem Eingriff steht. In dieser Stellung sind auch die beiden unteren, als Bohrung ausgeführten, ersten, bzw. zweiten Eingriffsmittel 25, 45 koaxial zueinander angeordnet und es kann ein Fixierelement (nicht dargestellt) eingeführt werden, welches das Stützelement insbesondere gegen Verlagerung längs der mittleren Haupterstreckungsrichtung E sichert. Die Richtung, entlang derer die ersten Eingriffsmittel 25 mit den zweiten Eingriffsmitteln 45 in formschlüssigen Eingriff bringbar sind, verläuft vorzugsweise parallel zur mittleren Haupterstreckungsrichtung E des armseitigen Eingriffsbereiches 24. Es sei an dieser Stelle angemerkt, dass sich die Armachse A und die mittlere Haupterstreckungsrichtung E des armseitigen Eingriffsbereiches 24 nicht zwangsläufig schneiden müssen, sondern auch windschief zueinander stehen können. Der in Fig. 1 eingezeichnete Winkel α ist dabei vorzugsweise zwischen den jeweiligen Projizierenden auf einer vertikalen Ebene, in welcher vorzugsweise die Armachse A liegt, wie in Fig. 1 dargestellt, definiert. Die dargestellte bevorzugte Ausführungsform vereinfacht die Montage der Lenkereinheit, da das Stützelement 4 zunächst über seine zweiten Eingriffsmittel 45 an den ersten Eingriffsmitteln 25 eingehängt werden kann und anschließend ein Fixierelement (nicht gezeigt) in die als Bohrung ausgeführten Eingriffsmittel 25, 45 in Eingriff bringbar ist. Die geringe Anzahl von Arbeitsschritten für die Montage und die geringe Zahl gleichzeitig zu hantierender Bauteile, sorgt mit Vorteil für eine schnelle und einfache Montage, bzw. Demontage der Lenkereinheit. Die Haupterstreckungsrichtung E des armseitigen Eingriffsbereiches ist vorzugsweise um einen Winkel α zu einer Armachse A geschwenkt. Die Armachse A verläuft dabei bevorzugt durch die Mittelpunkte des ersten Lagerbereiches 21 und des zweiten Lagerbereiches 23 des Armes 2. Das Stützelement 4 weist weiterhin einen Tragabschnitt 42 auf, welcher insbesondere in seiner Form dem Tauchkolben einer Luftfeder ähnelt.

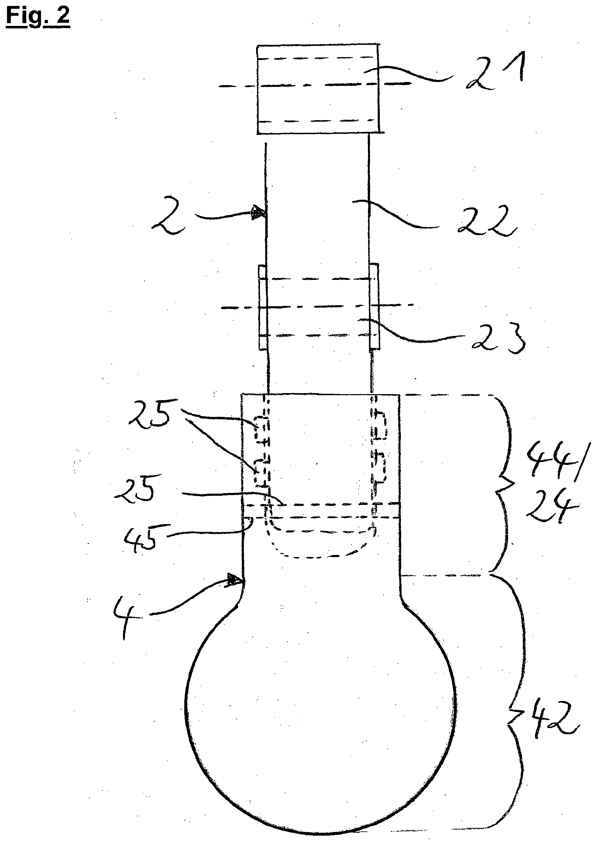

Fig. 2 zeigt eine Draufsicht auf die bevorzugte, bereits in Fig. 1 gezeigte Ausführungsform der erfindungsgemäßen Lenkereinheit. Vorzugsweise weist der stützseitige Eingriffsbereich 44 zwei gleichartig ausgebildete Schenkel auf, wobei an jedem der Schenkel vorzugsweise zwei zweite Eingriffsmittel 45 vorgesehen sind, welche jeweils dafür ausgelegt sind, mit je einem ersten Eingriffsmittel 25 des armseitigen Eingriffsbereiches 24 in formschlüssigen Eingriff gebracht zu werden. Die ersten Eingriffsmittel 25 sind vorzugsweise als Vorsprünge ausgebildet, die seitlich vom armseitigen Befestigungsbereich 24 abstehen. Die zweiten Eingriffsmittel 45 sind vorzugsweise als korrespondierende Rücksprünge ausgebildet. Weiterhin ist das als Bohrung ausgeführte erste, bzw. zweite Eingriffsmittel 25, 45, welches sich quer durch den armseitigen und den stützseitigen Befestigungsbereich erstreckt und durch welches bevorzugt ein Bolzen, oder eine Schraube schiebbar ist, vorgesehen, um das Stützelement 4 gegen Verlagerung relativ zum Arm 2 zu sichern. Der Tragbereich 42 des Stützelements 4 ist ohne weitere Konturen dargestellt, um zu verdeutlichen, dass alle Außengeometrien des Tragbereiches gerundet und mit gleichmäßigen Flächenverläufen ausgebildet sind. Der Tragbereich 42 ist einstückig mit dem Eingriffsbereich 44 ausgeführt. Als einstückig wird in diesem Zusammenhang, neben einer homogenen Ausführung aus einem Vollmaterial wie Stahl oder Aluminium, auch ein gleichmäßiger Verbund verschiedener Werkstoffe, wie Kohlefasern, Harz- bzw. Matrixmaterial und eingelegten, bzw. eingekleideten Metallelementen zu lokalen Festigkeitssteigerung, verstanden. Gekennzeichnet ist die Einstückigkeit dabei durch eine untrennbare Verbindung, bzw. Verflechtung der Werkstoffkomponenten, welche mit der Herstellung des Stützelements 4 erzeugt wird. In der Figur angedeutet ist weiterhin die Schwenkachse, um welche die Lenkereinheit im ersten Lagerabschnitt 21 des Armes 1 schwenkbar am Fahrzeugrahmen (nicht gezeigt) festlegbar bzw. festgelegt ist.

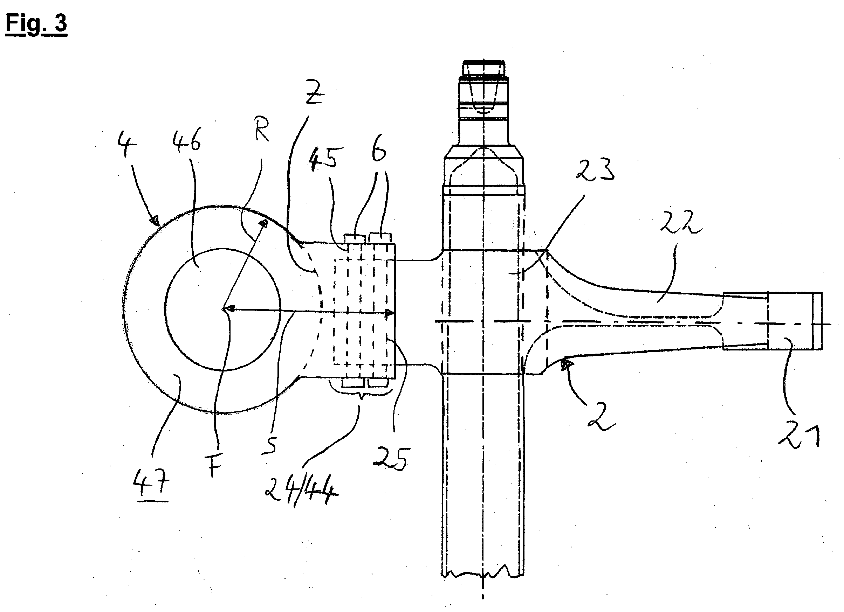

Bei der in Fig. 3 gezeigten Draufsicht einer bevorzugten Ausführungsform der erfindungsgemäßen Lenkereinheit ist eine bevorzugte Asymmetrie der Lenkereinheit, insbesondere des Armes 2 der Lenkereinheit, gezeigt. Diese Asymmetrie ist insbesondere auf Anforderungen bzw. Bauraumverhältnisse im Fahrwerksbereich des Nutzfahrzeuges zurückzuführen, wobei durch die asymmetrische Ausgestaltung des Armes 2 bei einer vorgegebenen Spurweite des Nutzfahrzeuges, d. h. Abstand der beiden auf einer Drehachse liegenden Räder voneinander, und einer vorgegebenen Befestigungsgeometrie am Fahrzeugrahmen die Bauraumverhältnisse optimal ausgenutzt werden können. Im zweiten Lagerabschnitt 23 des Armes 2 ist ein Achsrohr gezeigt, welches sich durch den zweiten Lagerabschnitt 23 hindurch erstreckt und an seinem distalen (oberen) Ende einen Achsstummel aufweist. Bei der gezeigten bevorzugten Ausführungsform ist das Stützelement 4 nur über als Bohrungen ausgebildete erste und zweite Eingriffsmittel 25, 45 und in diese eingreifende Fixierelemente 6 am Arm 2 festgelegt. Die dargestellten zwei Fixierelemente 6 entsprechen dabei der Mindestzahl zu verwendender Fixierelemente 6 um eine ausreichend hohe Festigkeit der Verbindung zwischen Stützelement 4 und Arm 2 zu erreichen. Am Tragbereich 42 des Stützelements 4 ist der gedachte Zylinder Z angedeutet, welcher einen Radius R aufweist und innerhalb dessen sich die Abrollfläche 47 des Tragbereiches 42 erstreckt. Wie dargestellt erstreckt sich der stützseitige Eingriffsbereich 44 außerhalb des gedachten Zylinders Z und weist vorzugsweise einen maximale Erstreckung S quer, bzw. vorzugsweise senkrecht zur Federachse F auf. Das Verhältnis des Radius' R zur Erstreckung S nimmt dabei bei dieser Ausführungsform bevorzugte Werte von 0,5 bis 0,6 an.

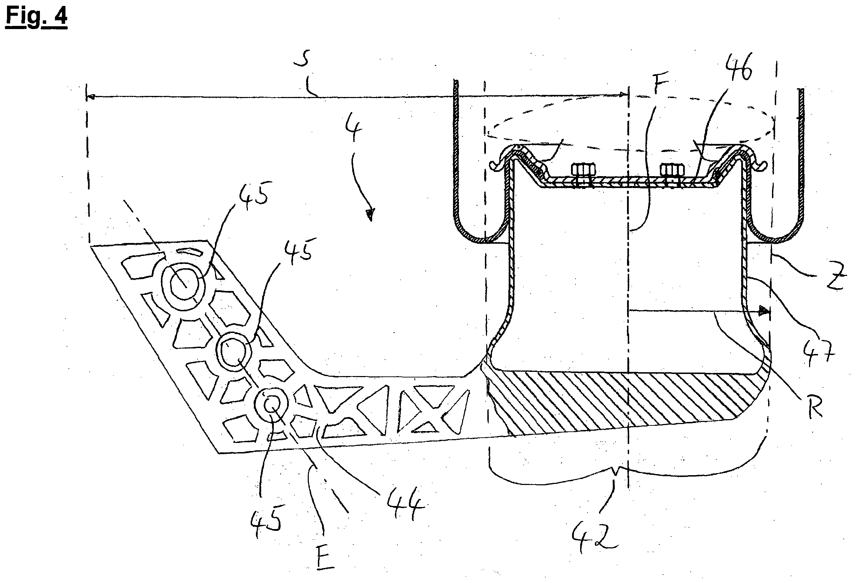

Fig. 4 zeigt eine bevorzugte Ausführungsform des Stützelements 4, wobei ein daran festzulegender Luftfederbalg angedeutet ist. Der Tragabschnitt 42 weist eine Abrollfläche 47 auf und einen Befestigungsabschnitt 46, wobei die Abrollfläche 47 im Wesentlichen rotationssymmetrisch um eine Federachse F ausgebildet ist. Konzentrisch um die Federachse F verläuft ein gedachter Zylinder Z, dessen Radius R durch den maximalen Abstand der Abrollfläche 47 von der Federachse F definiert ist. Weiterhin weist das Stützelement 4 im Befestigungsabschnitt 46 des Tragbereiches 42 vorzugsweise eine Klemmplatte auf, welche über Schrauben gegen den Rand des Luftfederbalges gezwungen wird, um diesen an dem Stützelement 4 festzulegen. Der stützseitige Eingriffsbereich 44 weist vorzugsweise eine Fachwerkstruktur auf, wobei durch kraftflussoptimierte Ausrichtung der Materialstege eine vergleichsweise geringe Querschnittsdicke hohe Kräfte und Biegemomente übertragen kann, wodurch sich mit Vorteil das Gewicht des Stützelements deutlich senken lässt. Vorzugsweise für den Fall dass das Stützelement 4 und insbesondere der stützseitige Eingriffsbereich 44 aus einem Kompositwerkstoff hergestellt ist, sind die zweiten Eingriffsmittel 45 als Metallverstärkungen oder metallische Armierung in die Fachwerkstruktur integriert um lokale Spannungsund Kraftspitzen besser in das Fachwerk einleiten zu können. Vorteilhafterweise kommen, wie dargestellt, metallische Hülsen zum Einsatz. Es versteht sich aber, dass beispielsweise bei der in Fig. 1 dargestellten Ausführungsform die hakenförmig ausgebildeten zweiten Eingriffsmittel 45 ebenfalls durch Metall verstärkt sein können.

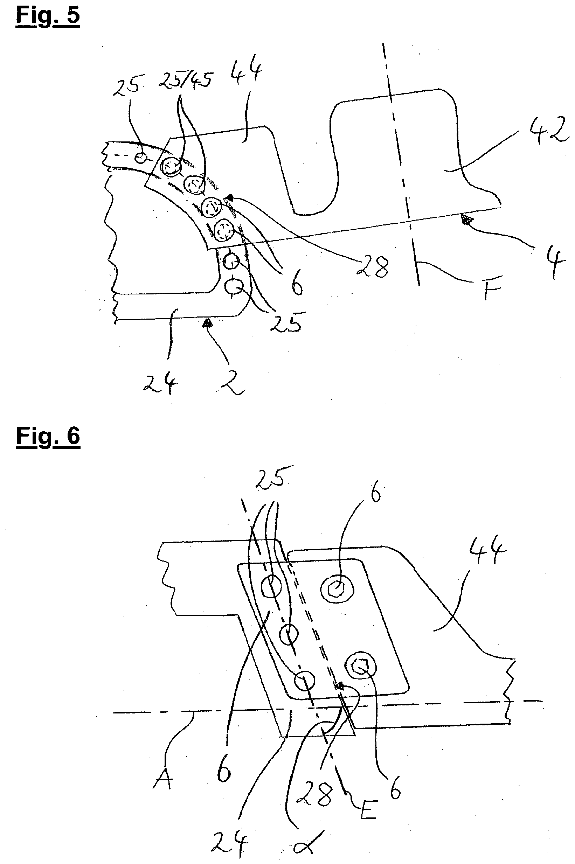

Fig. 5 zeigt eine bevorzugte Ausführungsform der erfindungsgemäßen Lenkereinheit, bei der der armseitige Eingriffsbereich 24 bogenförmig ausgebildet ist und vorzugsweise eine Vielzahl erster Eingriffsmittel 25 aufweist. Die ersten Eingriffsmittel 25 sind dabei vorzugsweise mit gleichmäßigen Abständen entlang einer kreisbahnähnlichen Geometrie angeordnet, welche in der Figur gestrichelt dargestellt ist. Der stützseitige Eingriffsbereich 44 weist zweite Eingriffsmittel 45 auf, welche vorzugsweise entlang einer, der kreisbahnähnlichen Geometrie des armseitigen Stützabschnitts 24 gleichenden Geometrie und in gleichen Abständen wie die ersten Eingriffsmittel 25 angeordnet sind. Dabei ist die Zahl der ersten Eingriffsmittel 25 oder der zweiten Eingriffsmittel 45 höher, wobei das Stützelement 4 in verschiedenen Einbaupositionen am Arm festlegbar ist. Durch die bogen- bzw. kreisförmige Ausbildung des armseitigen und des stützseitigen Eingriffsabschnitts 24, 44 ist es möglich, nicht nur die horizontale und vertikale Position des Bereiches an dem der Luftfederbalg festlegbar ist, des Tragbereiches 42 also, festzulegen, sondern gleichzeitig auch die Verschwenkung der Federachse F relativ zur Armachse A zu verändern. Es kann durch diese bevorzugte Änderung der Verschwenkung der Federachse F ein optimaler Einfedervorgang des Tragbereiches 42 in einen Luftfederbalg bei verschiedenen Fahrzeugtypen und den sich ergebenden Fahrwerksgeometrien eingestellt werden. Die in der Figur gezeigte, bevorzugte Ausführungsform ermöglicht aufgrund der Überzahl an ersten Eingriffsmitteln 25 von drei, insgesamt vier Anbaupositionen des Stützelements 4 an dem Arm 2.

Bei der in Fig. 6 gezeigten Ausführungsform, ist neben zwei bolzenförmig ausgeführten Fixierelementen 6 auch ein plattenförmig ausgeführtes Fixierelement 6 vorgesehen. Das plattenförmig ausgeführte Fixierelement 6 greift vorzugsweise in den als Vor- oder Rücksprung ausgeführten ersten Eingriffsmitteln 25 sowie in den bolzenförmigen Fixierelementen 6 oder in als Vorsprung oder Rücksprung ausgeführten zweiten Eingriffsmitteln 45 ein. Dabei besteht zwischen den ersten und den zweiten Eingriffsmitteln 25, 45 ein mittelbarer Formschluss, nämlich über ein oder eine Vielzahl von Fixierelementen 6. Weiterhin ist die Anschlagfläche 28 gezeigt, an welcher sich der stützseitige Eingriffsbereich abstützt um höhere Biegemomente übertragen zu können und die Fixierelemente 6 und die Eingriffsmittel 25, 45 zu entlasten. Bei der in Fig. 6 dargestellten Ausführungsform liegt der Winkel a zwischen der Armachse A und der Haupterstreckungsachse E vorzugsweise im Bereich von 70° bis 80°, wobei durch Verschieben der Einbauposition - bei Vorhandensein eines Überschusses an ersten oder zweiten Eingriffsmitteln 25, 45 wie erläutert zu Fig. 5 - vor allem die vertikale Position des Tragbereiches 42 relativ zum Arm 2 eingestellt werden kann. Dank dieser bevorzugten Ausführungsform lässt sich besonders leicht die Fahrhöhe regulieren.

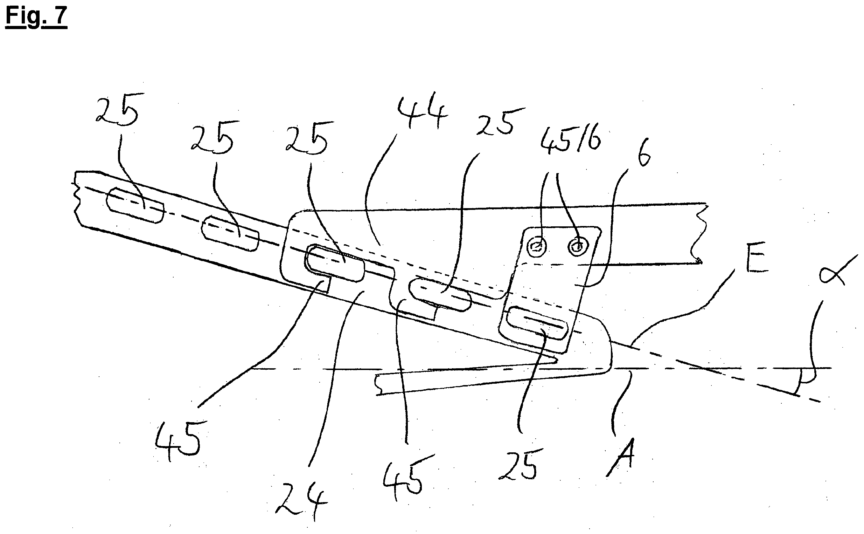

Fig. 7 zeigt eine weitere bevorzugte Ausführungsform der erfindungsgemäßen Lenkereinheit, wobei im Gegensatz zu der in Fig. 6 beschriebenen Ausführung, der Winkel α im bevorzugten Bereich von 20° bis 30° liegt. Mithilfe eines kleinen Winkels α wird bei Verschieben der Einbauposition des Stützelements 4 am Arm 2 vorzugsweise die Gesamtlänge der Lenkereinheit stärker variiert als die Fahrhöhe. Auf diese Weise kann die Lenkereinheit an eine Vielzahl von Fahrzeugtypen angepasst werden, welche jeweils bestimmte Längen eines Längslenkers erwarten, wobei dieser durch eine universell einsetzbare Lenkereinheit im Sinne der vorliegenden Erfindung ersetzt werden kann. Weiterhin ist die Ausgestaltung der ersten und zweiten Eingriffsmittel 25, 45 eine bevorzugte Kombination der in den Figuren 1, 5 und 6 gezeigten Ausführungsformen. Zum einen ist eine Überzahl erster Eingriffsmittel 25 vorgesehen, woraus sich mehrere Einbaupositionen am armseitigen Eingriffsbereich 24 ergeben. Des Weiteren kommen vorzugsweise hakenförmige zweite Eingriffsmittel 45 zum Einsatz, wobei die Position, in welcher die ersten Eingriffsmittel 25 in der Hinterschneidung der zweiten Eingriffsmittel 45 gehalten sind, durch ein plattenförmig ausgebildetes Fixierelement 6 gesichert wird.

Wie bereits durch die in Fig. 7 gezeigte Ausführungsform angedeutet, ist es im Rahmen der Erfindung besonders bevorzugt vorgesehen, die in einzelnen Ausführungsformen verwendeten Merkmale auch in weiteren bevorzugten Ausführungsformen zum Einsatz gelangen zu lassen. Dies betrifft beispielhaft die Ausbildung der Eingriffsmittel 25, 45, den Einsatz von Fixierelementen 6 oder auch die Möglichkeit Eingriffsmittel 25, 45 nicht nur mit einem Versatz entlang einer Linie, sondern eine Vielzahl von Eingriffsmitteln 25, 45 entlang einer Vielzahl von zueinander versetzten linienförmigen oder gekrümmten Geometrien anzuordnen um so die Flexibilität der Lenkereinheit weiter zu steigern.

**Bezugszeichen:**

| | | | |
|---|---|---|---|
| 2 - Arm | | 44 - stützseitiger Eingriffsbereich | |
| 4 - Stützelement | | 45 - zweites Eingriffsmittel | |
| 6 - Fixierelement | | 46 - Befestigungsabschnitt | |
| 21 - erster Lagerabschnitt | | 47 - Abrollfläche | |
| 22 - Tragabschnitt | | α - Winkel | |
| 23 - zweiter Lagerabschnitt | | E - Haupterstreckungsrichtung | |
| 24 - armseitiger Eingriffsbereich | | F - Federachse | |
| 25 - erstes Eingriffsmittel | | R - Radius des gedachten Zylinders | |
| 28 - Anlagefläche | | S - Erstreckung | |
| 42 - Tragbereich | | Z - gedachter Zylinder | |

## Patentansprüche

1. Lenkereinheit, insbesondere für Nutzfahrzeuge, umfassend einen Arm (2) und ein Stützelement (4),
wobei der Arm (2) einen armseitigen Eingriffsbereich (24) aufweist,
wobei am armseitigen Eingriffsbereich (24) ein erstes Eingriffsmittel (25) vorgesehen ist, das mit einem an einem stützseitigen Eingriffsbereich (44) vorgesehenen zweiten Eingriffsmittel (45) in Eingriff bringbar ist, und
wobei ein Tragbereich (42) einen Befestigungsabschnitt (46) zur Festlegung eines Luftfederbalges und eine Abrollfläche (47) aufweist,
wobei das Stützelement (4) den Tragbereich (42) und den stützseitigen Eingriffsbereich (44) aufweist und einstückig ausgebildet ist,
**dadurch gekennzeichnet, dass**
die Abrollfläche (47) im Wesentlichen rotationssymmetrisch um eine Federachse (F) ausgebildet ist,
wobei der maximale Abstand der Abrollfläche (47) quer zur Federachse (F) der Radius (R) eines gedachten Zylinders (Z) ist,
wobei der stützseitige Eingriffsbereich (44) am Stützelement (4) außerhalb des gedachten Zylinders (Z) angeordnet ist.

2. Lenkereinheit, insbesondere für Nutzfahrzeuge, umfassend einen Arm (2) und ein Stützelement (4),
wobei der Arm (2) einen armseitigen Eingriffsbereich (24) aufweist, wobei am armseitigen Eingriffsbereich (24) ein erstes Eingriffsmittel (25) vorgesehen ist, das mit einem an einem stützseitigen Eingriffsbereich (44) vorgesehenen zweiten Eingriffsmittel (45) in Eingriff bringbar ist, und
wobei ein Tragbereich (42) einen Befestigungsabschnitt (46) zur Festlegung eines Luftfederbalges und eine Abrollfläche (47) aufweist,
**dadurch gekennzeichnet, dass**
das Stützelement (4) den Tragbereich (42) und den stützseitigen Eingriffsbereich (44) aufweist und einstückig ausgebildet ist,
wobei das erste Eingriffsmittel (25) als Vorsprung oder Rücksprung ausgebildet ist, wobei das zweite Eingriffsmittel (45) eine zum ersten Eingriffsmittel (25) korrespondierende Geometrie aufweist und mit dem ersten Eingriffsmittel (25) in formschlüssigen Eingriff bringbar ist,
wobei eine Vielzahl von ersten und zweiten Eingriffsmitteln (25, 45) vorgesehen ist, wobei ein erstes Eingriffsmittel (25) oder eine Vielzahl von zweiten Eingriffsmitteln (45) als hakenförmige Geometrie ausgebildet ist/sind.

3. Lenkereinheit nach Anspruch 2,
wobei die Abrollfläche (47) im Wesentlichen rotationssymmetrisch um eine Federachse (F) ausgebildet ist,
wobei der maximale Abstand der Abrollfläche (47) quer zur Federachse (F) der Radius (R) eines gedachten Zylinders (Z) ist,
wobei der stützseitige Eingriffsbereich (44) am Stützelement (4) vorzugsweise außerhalb des gedachten Zylinders (Z) angeordnet ist.

4. Lenkereinheit nach Anspruch 1 oder 3,
wobei der stützseitige Eingriffsbereich (44) eine maximale Erstreckung (S) quer zur Federachse (F) aufweist, und
wobei das Verhältnis des Radius (R) zur Erstreckung (S) im Bereich von 0,1 bis 0,95, vorzugsweise 0,3 bis 0,8 und besonders bevorzugt bei ca. 0,4 bis 0,6 liegt.

5. Lenkereinheit nach Anspruch 1,
wobei das erste Eingriffsmittel (25) als Vorsprung oder Rücksprung ausgebildet ist, wobei das zweite Eingriffsmittel (45) eine zum ersten Eingriffsmittel (25) korrespondierende Geometrie aufweist und mit dem ersten Eingriffsmittel (25) in formschlüssigen Eingriff bringbar ist.

6. Lenkereinheit nach einem der vorhergehenden Ansprüche,
wobei ein Fixierelement (6) vorgesehen ist, welches sowohl mit einem ersten Eingriffsmittel (25) als auch mit einem zweiten Eingriffsmittel (45) in formschlüssigen Eingriff bringbar ist.

7. Lenkereinheit nach Anspruch 1,
wobei eine Vielzahl von ersten und zweiten Eingriffsmitteln (25, 45) vorgesehen ist,
wobei zumindest ein erstes Eingriffsmittel (25) und ein zweites Eingriffsmittel (45) als Bohrung ausgeführt und mit einem Fixierelement (6) in Eingriff bringbar sind.

8. Lenkereinheit nach einem der vorhergehenden Ansprüche,
wobei der armseitige Eingriffsbereich (24) eine Anlagefläche (28) aufweist, an welcher eine Anlagefläche des stützseitigen Eingriffsbereiches (44) sich abstützend zur Anlage bringbar ist.

9. Lenkereinheit nach einem der vorhergehenden Ansprüche,
wobei der Arm (2) einen ersten Lagerabschnitt (21), einen Tragabschnitt (22) und einen zweiten Lagerabschnitt (23) aufweist,
wobei der Tragabschnitt (22) sich zwischen dem ersten und dem zweiten Lagerabschnitt (21, 23) erstreckt,
wobei eine Armachse (A) durch den ersten und den zweiten Lagerabschnitt (21, 23) verläuft,
wobei der armseitige Eingriffsbereich (24) eine mittlere Haupterstreckungsrichtung (E) aufweist, und
wobei die mittlere Haupterstreckungsrichtung (E) zur Armachse (A) um einem Winkel (α) verschwenkt, bzw. geneigt ist.

10. Lenkereinheit nach Anspruch 9,
wobei der Winkel (α) Werte von 1° - 90°, vorzugsweise 15° - 75° und besonders bevorzugt von ca. 30°- 60° besitzt.

11. Lenkereinheit nach einem der Ansprüche 8 bis 10,
wobei das erste Eingriffsmittel (25) eine Eingriffsrichtung aufweist, welche in einer Parallelfläche zur ersten Anlagefläche (28) liegt,
wobei eine Vielzahl erster Eingriffsmittel (25) entlang dieser Parallelfläche am armseitigen Eingriffsbereich (24) vorgesehen ist.

12. Lenkereinheit nach einem der vorhergehenden Ansprüche,
wobei eine größere Zahl erster Eingriffsmittel (25) als zweiter Eingriffsmittel (45) vorgesehen ist, und
wobei die ersten Eingriffsmittel (25) mit gleichen Abständen zueinander am armseitigen Eingriffsbereich (24) angeordnet sind.

13. Lenkereinheit nach einem der vorhergehenden Ansprüche,
wobei das Stützelement (4) einen Kompositwerkstoff aufweist, und wobei vorzugsweise ein 0,2- bis 1-faches, besonders bevorzugt 0,5- bis 1-faches und insbesondere bevorzugt ein ca. 0,75- bis 0,95-faches des Stützelements (4) aus einem Kompositwerkstoff hergestellt ist.

14. Lenkereinheit nach Anspruch 13,
wobei als Kompositwerkstoff ein Kohlefaserverbundwerkstoff zum Einsatz gelangt.

15. Lenkereinheit nach einem der vorhergehenden Ansprüche,
wobei der stützseitige Eingriffsbereich (44) eine Fachwerkstruktur aufweist.

16. Lenkereinheit nach einem der vorhergehenden Ansprüche,
wobei im Befestigungsabschnitt (46) des Stützelements (4) eine Klemmplatte zur kraftschlüssigen Festlegung eines Luftfederbalges vorgesehen ist.

## Claims

1. Link unit, in particular for commercial vehicles, comprising an arm (2) and a supporting element (4),
the arm (2) having an arm-side engagement region (24),
a first engagement means (25) being provided on the arm-side engagement region (24), which first engagement means (25) can be brought into engagement with a second engagement means (45) which is provided on an support-side engagement region (44), and
a load-bearing region (42) having a fastening section (46), for fixing an air suspension bellows, and a rolling face (47),
the supporting element (4) having the load-bearing region (42) and the support-side engagement region (44) and being configured in one piece,
**characterized in that**
the rolling face (47) is of substantially rotationally symmetrical configuration about a spring axis (F),
the maximum spacing of the rolling face (47) transversely with respect to the spring axis (F) being the radius (R) of an imaginary cylinder (Z),
the support-side engagement region (44) on the supporting element (4) being arranged outside the imaginary cylinder (Z).

2. Link unit, in particular for commercial vehicles, comprising an arm (2) and a supporting element (4),
the arm (2) having an arm-side engagement region (24),
a first engagement means (25) being provided on the arm-side engagement region (24), which first engagement means (25) can be brought into engagement with a second engagement means (45) which is provided on an support-side engagement region (44), and
a load-bearing region (42) having a fastening section (46), for fixing an air suspension bellows, and a rolling face (47),
**characterized in that**
the supporting element (4) has the load-bearing region (42) and the support-side engagement region (44) and is configured in one piece
the first engagement means (25) being configured as a projection or recess, the second engagement means (45) having a geometry which corresponds to the first engagement means (25) and being capable of being brought into positively locking engagement with the first engagement means (25),
a multiplicity of first and second engagement means (25, 45) being provided, a first engagement means (25) or a multiplicity of second engagement means (45) having a hook-shaped geometry.

3. Link unit according to claim 2,
the rolling face (47) being of substantially rotationally symmetrical configuration about a spring axis (F),
the maximum spacing of the rolling face (47) transversely with respect to the spring axis (F) being the radius (R) of an imaginary cylinder (Z),
the support-side engagement region (44) on the supporting element (4) preferably being arranged outside the imaginary cylinder (Z).

4. Link unit according to claim 1 or 3,
the support-side engagement region (44) having a maximum extent (S) transversely with respect to the spring axis (F), and
the ratio of the radius (R) to the extent (S) lying in the range from 0.1 to 0.95, preferably from 0.3 to 0.8 and particularly preferably at from approximately 0.4 to 0.6.

5. Link unit according to claim 1,
the first engagement means (25) being configured as a projection or recess,
the second engagement means (45) having a geometry which corresponds to the first engagement means (25) and being capable of being brought into positively locking engagement with the first engagement means (25).

6. Link unit according to one of the preceding claims,
a fixing element (6) being provided which can be brought into positively locking engagement both with the first engagement means (25) and with the second engagement means (45).

7. Link unit according to claim 1,
a multiplicity of first and second engagement means (25, 45) being provided, at least one first engagement means (25) and one second engagement means (45) being configured as a bore and being capable of being brought into engagement with a fixing element (6).

8. Link unit according to one of the preceding claims,
the arm-side engagement region (24) having a bearing face (28), against which a bearing face of the support-side engagement region (44) can be brought to bear so as to support itself.

9. Link unit according to one of the preceding claims,
the arm (2) having a first bearing section (21), a load-bearing section (22) and a second bearing section (23),
the load-bearing section (22) extending between the first and the second bearing section (21, 23),
an arm axis (A) running through the first and the second bearing section (21, 23),
the arm-side engagement region (24) having a middle main extent direction (E), and
the middle main extent direction (E) being pivoted or inclined by an angle (a) with respect to the arm axis (A).

10. Link unit according to Claim 9,
the angle (a) having values of from 1° to 90°, preferably from 15° to 75° and particularly preferably of from approximately 30° to 60°.

11. Link unit according to one of Claims 8 to 10,
the first engagement means (25) having an engagement direction which lies in a parallel surface to the first bearing face (28),
a multiplicity of first engagement means (25) being provided along said parallel surface on the arm-side engagement region (24).

12. Link unit according to one of the preceding claims,
a greater number of first engagement means (25) than second engagement means (45) being provided, and
the first engagement means (25) being arranged at identical spacings from one another on the arm-side engagement region (24).

13. Link unit according to one of the preceding claims,
the supporting element (4) having a composite material, and
preferably from 0.2 to 1 times, particularly preferably from 0.5 to 1 times and in particular preferably from approximately 0.75 to 0.95 times the supporting element (4) being produced from a composite material.

14. Link unit according to Claim 13,
a carbon fibre composite material being used as composite material.

15. Link unit according to one of the preceding claims,
the support-side engagement region (44) having a framework structure.

16. Link unit according to one of the preceding claims,
a clamping plate for non-positive fixing of an air suspension bellows being provided in the fastening section (46) of the supporting element (4).

## Revendications

1. Unité formant bras de direction, en particulier pour véhicules utilitaires, comprenant un bras (2) et un élément de soutien (4),
dans laquelle
le bras (2) présente une zone d'engagement (24) côté bras,
un premier moyen d'engagement (25) est prévu sur la zone d'engagement (24) côté bras, qui est susceptible d'être amené en engagement avec un second moyen d'engagement (45) prévu sur une zone d'engagement (44) côté soutien, et
une zone de support (42) comprend une portion de fixation (46) pour immobiliser un soufflet de suspension pneumatique, et une surface de roulement (47),
l'élément de soutien (4) présente la zone de support (42) et la zone d'engagement (44) côté support et est réalisé d'un seul tenant,
**caractérisée en ce que**
la surface de roulement (47) est réalisée sensiblement à symétrie de révolution autour d'un axe de ressort (F),
la distance maximale de la surface de roulement (47) transversalement à l'axe de ressort (F) est le rayon (R) d'un cylindre imaginaire (Z),
la zone d'engagement (44) côté soutien sur l'élément de soutien (4) est disposée à l'extérieur du cylindre imaginaire (Z).

2. Unité formant bras de direction, en particulier pour véhicules utilitaires, comprenant un bras (2) et un élément de soutien (4),
dans laquelle
le bras (2) présente une zone d'engagement (24) côté bras,
un premier moyen d'engagement (25) est prévu sur la zone d'engagement (24) côté bras et est susceptible d'être amené en engagement avec un second moyen d'engagement (45) prévu sur une zone d'engagement (44) côté soutien, et
une zone de support (42) comporte une portion de fixation (46) pour immobiliser un soufflet de suspension pneumatique, et une surface de roulement (47),
**caractérisée en ce que**
l'élément de soutien (4) comporte la zone de support (42) et la zone d'engagement (44) côté soutien et est réalisé d'un seul tenant,
le premier moyen d'engagement (25) est réalisé sous forme de saillie ou de retrait, le second moyen d'engagement (45) présente une géométrie correspondante à celle du premier moyen d'engagement (25) et peut être amené en engagement par coopération de formes avec le premier moyen d'engagement (25),
il est prévu une pluralité de premiers et de seconds moyens d'engagement (25, 45), et un premier moyen d'engagement (25) ou une pluralité de seconds moyens d'engagement (45) est/sont formés comme une géométrie en forme de crochet.

3. Unité formant bras de direction selon la revendication 2,
dans laquelle
la surface de roulement (47) est réalisée sensiblement à symétrie de révolution autour d'un axe de ressort (F),
la distance maximale de la surface de roulement (47) transversalement à l'axe de ressort (F) est le rayon (R) d'un cylindre imaginaire (Z),
la zone d'engagement (44) côté soutien sur l'élément de soutien (4) est de préférence disposée à l'extérieur du cylindre imaginaire (Z).

4. Unité formant bras de direction selon la revendication 1 ou 3,
dans laquelle
la zone d'engagement (44) côté soutien présente une extension maximale (S) transversalement à l'axe de ressort (F), et
le rapport du rayon (R) sur l'extension (S) est dans la plage de 0,1 à 0,95, de préférence de 0,3 à 0,8 et de préférence particulière d'environ 0,4 à 0,6.

5. Unité formant bras de direction selon la revendication 1,
dans laquelle
le premier moyen d'engagement (25) est réalisé sous forme de saillie ou de retrait, le second moyen d'engagement (45) présentant une géométrie correspondante à celle du premier moyen d'engagement (25) et pouvant être amené en engagement par coopération de formes avec le premier moyen d'engagement (25).

6. Unité formant bras de direction selon l'une des revendications précédentes,
dans laquelle
il est prévu un élément de fixation (6) qui est susceptible d'être amené en engagement par coopération de formes aussi bien avec un premier moyen d'engagement (25) qu'avec un second moyen d'engagement (45).

7. Unité formant bras de direction selon la revendication 1,
dans laquelle
il est prévu une multitude de premiers et seconds moyens d'engagement (25, 45),
au moins un premier moyen d'engagement (25) et un second moyen d'engagement (45) sont réalisés sous forme de perçage et susceptibles d'être amenés en engagement avec un élément de fixation (6).

8. Unité formant bras de direction selon l'une des revendications précédentes,
dans laquelle
la zone d'engagement (24) côté bras comprend une surface d'appui (28) contre laquelle peut venir s'appuyer une surface d'appui de la zone d'engagement (44) côté soutien.

9. Unité formant bras de direction selon l'une des revendications précédentes,
dans laquelle
le bras (2) présente une première portion de montage (21), une portion de support (22) et une seconde portion de montage (23),
la portion de support (22) s'étend entre la première et la seconde portion de montage (21, 23),
un axe de bras (A) traverse la première et la seconde portion de montage (21, 23),
la zone d'engagement (24) côté bras présente une direction d'extension principale (E) centrale, et
la direction d'extension principale (E) centrale est pivotée ou inclinée d'un angle (a) par rapport à l'axe de bras (A).

10. Unité formant bras de direction selon la revendication 9,
dans laquelle
l'angle (a) possède des valeurs de 1° à 90°, de préférence de 15° à 75° et de manière particulièrement préférée d'environ 30° à 60°.

11. Unité formant bras de direction selon l'une des revendications 8 à 10, dans laquelle
le premier moyen d'engagement (25) présente une direction d'engagement qui se trouve dans une surface parallèle à la première surface d'appui (28),
sur la zone d'engagement (24) côté bras, il est prévu une multitude de premiers moyens d'engagement (25) le long de cette surface parallèle.

12. Unité formant bras de direction selon l'une des revendications précédentes,
dans laquelle
il est prévu un nombre plus grand de premiers moyens d'engagement (25) que de seconds moyens d'engagement (45), et
les premiers moyens d'engagement (25) sont agencés de façon équidistante sur la zone d'engagement (24) côté bras.

13. Unité formant bras de direction selon l'une des revendications précédentes,
dans laquelle
l'élément de soutien (4) comprend un matériau composite, et
de préférence une part de 0,2 à 1 fois, de préférence particulière de 0,5 à 1 fois et de manière tout particulièrement préférée une part d'environ 0,75 à 0,95 fois de l'élément de soutien (4) est réalisée en un matériau composite.

14. Unité formant bras de direction selon la revendication 13,
dans laquelle
on utilise à titre de matériau composite un matériau composite à fibres de carbone.

15. Unité formant bras de direction selon l'une des revendications précédentes,
dans laquelle
la zone d'engagement (44) côté soutien présente une structure en treillis.

16. Unité formant bras de direction selon l'une des revendications précédentes,
dans laquelle
dans la portion de fixation (46) de l'élément de soutien (4), il est prévu une plaque de coincement pour l'immobilisation par coopération de forces d'un soufflet de suspension pneumatique.
